# EUROPEAN PATENT APPLICATION

(11) **EP 4 734 190 A1**
(43) Date of publication of application: **29.04.2026**
(21) Application number: 25210359.3
(22) Date of filing: 22.10.2025
(51) Int. Cl.: H01M 4/66, H01M 10/0525, H01M 10/42

(54) **CURRENT COLLECTORS, ELECTRODES INCLUDING THE SAME, AND RECHARGEABLE LITHIUM BATTERIES**

(30) Priority: 24.10.2024 KR 20240147042
(71) Applicant: SAMSUNG SDI CO., LTD., Yongin-si, Gyeonggi-do 17084 (KR)
(72) Inventor: JEONG, Yohan, 17084 Gyeonggi-do (KR)
(74) Representative: Michalski Hüttermann & Partner Patentanwälte mbB

(57) **Abstract**

A current collector, an electrode including the current collector, and a rechargeable lithium battery are provided. The current collector includes: a first metal layer; a second metal layer; and a piezoelectric layer arranged between the first metal layer and the second metal layer and including a piezoelectric material.

## Description

### CROSS-REFERENCE TO RELATED APPLICATION

The present application claims priority to and the benefit of Korean Patent Application No. 10-2024-0147042, filed on October 24, 2024, in the Korean Intellectual Property Office, the entire disclosure of which is incorporated herein by reference.

### BACKGROUND

### 1. Field

One or more embodiments of the present disclosure relate to current collectors, electrodes including the same, and rechargeable lithium batteries including such electrodes.

### 2. Description of the Related Art

Rechargeable lithium batteries are widely used as power sources in portable information devices (such as cell phones, laptop computers, smart phones, and/or the like) and/or electric vehicles. These batteries are favored for their high energy density and easy portability. In recent years, significant research has been directed toward enhancing the performance of rechargeable lithium batteries for use in hybrid and electric vehicles, as well as in energy storage systems (ESS) and residential power storage units such as power walls.

Rechargeable lithium batteries generally include a positive electrode and a negative electrode each including an active material capable of intercalating and deintercalating lithium ions along with an electrolyte (e.g., an electrolyte solution). Electrical energy is produced through oxidation and reduction reactions when lithium ions are intercalated/deintercalated from/into the positive electrode and negative electrode. For example, during discharge, electrical energy is generated when lithium ions are intercalated into the positive electrode and/or deintercalated from the negative electrode.

Transition metal compounds such as lithium cobalt-based oxides, lithium nickel-based oxides, and/or lithium manganese-based oxides are primarily used as positive electrode active materials for rechargeable lithium batteries. Crystalline carbon materials such as natural graphite, artificial graphite and/or amorphous carbon materials are primarily used as negative electrode active materials.

### SUMMARY

One or more aspects of embodiments of the present disclosure are directed toward a current collector capable of improving the performance of a rechargeable lithium battery through volume change that inevitably occurs by using a piezoelectric material. For example, the current collector is configured to improve the performance of the rechargeable lithium battery by accommodating volume changes that inevitably occur during charge and discharge cycles, through the use of the piezoelectric material. One or more aspects of embodiments of the present disclosure are directed toward an electrode including such a current collector, and a rechargeable lithium battery including such an electrode. Additional aspects will be set forth in part in the description which follows and, in part, will be apparent from the description, or may be learned by practice of the presented embodiments of the disclosure.

According to one or more embodiments of the present disclosure, a current collector includes: a first metal layer; a second metal layer; and a piezoelectric layer between (e.g., arranged between) the first metal layer and the second metal layer and including a piezoelectric material.

According to one or more embodiments of the present disclosure, an electrode includes the current collector.

According to one or more embodiments of the present disclosure, a rechargeable lithium battery includes: a positive electrode; a negative electrode; and an electrolyte, wherein at least one of the positive electrode or the negative electrode is the electrode including the current collector.

One or more embodiments of the present disclosure provide a current collector configured to improve the performance and durability of a rechargeable lithium battery by accommodating volume changes that inevitably occur during charge and discharge cycles. This is achieved through the incorporation of a piezoelectric material within the current collector structure. The piezoelectric material may respond to mechanical stress by generating an electric field or deform in response to an electric field, thereby enabling the current collector to dynamically adjust to internal mechanical strain. As a result, the structural integrity of the electrode is maintained, reducing the risk of cracking, delamination, or loss of electrical contact over repeated cycles. Embodiments of the present disclosure also relate to an electrode including such a current collector, and to a rechargeable lithium battery including such an electrode. By integrating the piezoelectric-enhanced current collector into the battery architecture, the battery may exhibit improved cycle life, enhanced mechanical stability, and more consistent electrochemical performance. These improvements are beneficial in high-demand applications such as electric vehicles and/or energy storage systems, where long-term reliability and efficiency are desired.

### BRIEF DESCRIPTION OF DRAWINGS

The accompanying drawings are included to provide a further understanding of the present disclosure and are incorporated in and constitute a part of the present disclosure. The drawings illustrate embodiments of the present disclosure and, together with the description, serve to explain principles of the present disclosure. The above and other aspects, features, and advantages of certain embodiments of the present disclosure will be more apparent from the following description taken in conjunction with the accompanying drawings.
FIGS. 1 - 4 are each a schematic views showing a rechargeable lithium battery according to one or more embodiments of the present disclosure.
FIGS. 5A - 5C are schematic views showing the charge distribution of a material to explain the piezoelectric effect.
FIG. 6 is a cross-sectional view schematically showing a current collector according to one or more embodiments of the present disclosure.

### DETAILED DESCRIPTION

Hereinafter, one or more embodiments of the present disclosure will be described in more detail so that those of ordinary skill in the art may easily implement them and understand the disclosure. However, this disclosure may be embodied in many different forms and is not construed as limited to the presented embodiments set forth herein.

The terminology used herein is used to describe embodiments only, and is not intended to limit the present disclosure. The singular expression in the present disclosure may include the plural expression unless the context clearly dictates otherwise. For example, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Herein, it should be understood that terms such as "comprise(s)/comprising," "include(s)/including," and/or "has(have)/having" are intended to designate the presence of an embodied feature, number, step (e.g., act or task), element, or a combination thereof, but it does not preclude the possibility of the presence or addition of one or more other features, numbers, steps (e.g., acts or tasks), elements, or a combination thereof. Additionally, the terms "comprise(s)/comprising," "include(s)/including," "have/has/having", or other similar terms include or support the terms "consisting of" and "consisting essentially of," indicating the presence of stated features, numbers, steps, operations, elements, and/or components, without or essentially without the presence of other features, numbers, steps, operations, elements, components, and/or groups thereof.

In the drawings, the thickness of layers, films, panels, regions, and/or the like, may be exaggerated for clarity, and like reference numerals designate like elements throughout the disclosure, duplicative descriptions thereof may not be provided for conciseness. It will be understood that if (e.g., when) an element such as a layer, film, region, or substrate is referred to as being "on" another element, it may be directly on the other element or one or more intervening elements may also be present therebetween. In contrast, if (e.g., when) an element is referred to as being "directly on" another element, there are no intervening elements present therebetween.

In addition, "layer" as used herein includes not only a shape formed on the whole surface if (e.g., when) viewed from a plan view, but also a shape formed on a partial surface (e.g., a portion of whole surface).

The average particle diameter/size may be measured by a method well suitable to those skilled in the art, for example, by a particle size analyzer, or by using a transmission electron microscope image and/or a scanning electron microscope image. In one or more embodiments, it may obtain an average particle diameter/size value using a dynamic light scattering method by measuring a sample, performing data analysis, counting the number of particles for each particle size range, and calculating from the collected data. Unless otherwise defined, the average particle diameter/size may refer to the diameter/size (D₅₀) of particles having a cumulative volume of 50 volume% in a particle size distribution. In other words, D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates a particle diameter or an average particle diameter, and when the particles are non-spherical, the "diameter" indicates a major axis length or an average major axis length. As used herein, if (e.g., when) a definition is not otherwise provided, the average particle diameter/size may refer to a diameter/size (D₅₀) of particles having a cumulative volume of 50 volume% in a particle size distribution that is obtained by measuring the size (diameter or major axis length) of about 20 particles at random in a scanning electron microscope image.

Herein, "and/or," "or," and "/" are not to be construed as an exclusive meaning, for example, "A or B," "A and/or B," "A/B," and/or the like may be construed to include A, B, A+B, and/or the like.

"Metal" as used herein is interpreted as a concept including one or more selected from among ordinary metals, transition metals, and metalloids (semi-metals), and includes not only an elemental metal but also a metal alloy formed by mixing two or more metals and/or non-metals.

### Current Collector

According to one or more embodiments of the present disclosure, a current collector may include: a first metal layer; a second metal layer; and a piezoelectric layer between (e.g., arranged between) the first metal layer and the second metal layer and including a piezoelectric material.

Rechargeable lithium batteries inevitably experience volume changes during the charging and discharging process as lithium flows in and out. In particular, silicon-based materials used to increase the capacity of a negative electrode undergo volume expansion equivalent to 300 to 400 volume% of the original volume of the negative electrode. The rechargeable lithium battery may not effectively relieve the stress that occurs because electrode plates change volume in a limited space, causing problems such as cracks and deformation.

Accordingly, the current collector of one or more embodiments of the present disclosure may improve the performance of a rechargeable lithium battery through volume change that inevitably occurs by using a piezoelectric material.

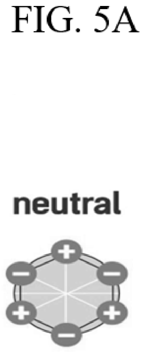

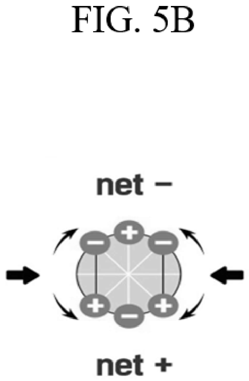

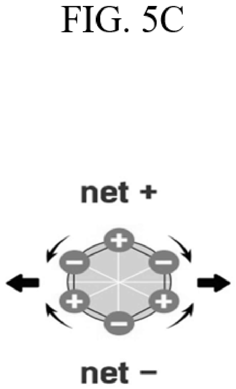

If (e.g., when) piezoelectric materials are used, a piezoelectric effect may be expected. Solid materials are basically made up of a structure in which molecules of a same shape are repeated, and the distribution of positive (+) and negative (-) charges is balanced, making them electrically neutral. As shown in FIG. 5A, positive and negative charges are regularly arranged, so that (+) charges and (-) charges have a structure in which they cancel each other out. When force is applied here and a slight change occurs in the crystal structure of the piezoelectric material, the distribution of charges changes as shown in FIG. 5B and FIG. 5C, and electricity flows instantaneously. The piezoelectric effect is the principle that if (e.g., when) one side of a material becomes relatively (+) strong and the other side becomes relatively (-), the charge distribution of the material is divided into a positive side and a negative side, allowing electrons to flow. For example, as illustrated in FIG. 5A, the positive and negative charges are symmetrically arranged and cancel each other out. However, when mechanical force is applied, the crystal structure of the piezoelectric material undergoes a slight deformation, altering the charge distribution as shown in FIGS. 5B and 5C, and generating an instantaneous electric current. This phenomenon-where one side of the material becomes relatively positive and the other relatively negative-enables electron flow due to the separation of charge.

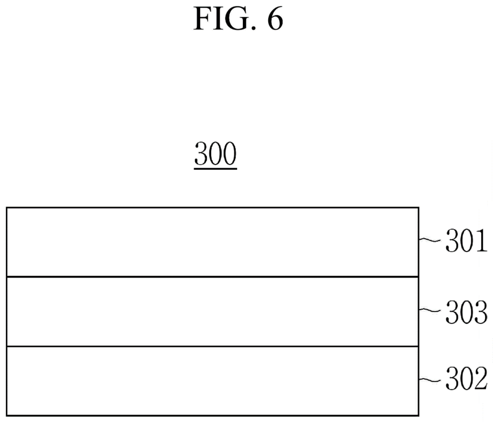

FIG. 6 is a cross-sectional view schematically showing a current collector according to one or more embodiments of the present disclosure. A current collector 300 according to one or more embodiments includes: a first metal layer 301; a second metal layer 302; and a piezoelectric layer 303 between (e.g., arranged between) the first metal layer 301 and the second metal layer 302 and including a piezoelectric material. By incorporating a piezoelectric material into a three-layer structure within the current collector, the collector may respond dynamically to mechanical stress caused by volume expansion and contraction during charging and discharging of the battery. When the current collector is compressed due to such volume changes, the piezoelectric layer may generate an electric field. This electric field may facilitate the movement of electrons and lithium ions within the battery, thereby enhancing charge transport and improving overall electrochemical performance. In this way, the piezoelectric-enhanced current collector not only accommodates mechanical deformation but also contributes to improved energy efficiency and cycle stability of the rechargeable lithium battery.

In addition, by providing a piezoelectric layer exhibiting a piezoelectric effect between the first metal layer and the second metal layer, direct contact between an active material layer of an electrode including the current collector and the piezoelectric layer may be avoided. This structural separation may reduce interfacial resistance, which is advantageous for achieving improved charge/discharge capacity, rate performance, and cycle-life characteristics of the electrode. In addition, because the process of directly coating and drying an electrode active material layer on a piezoelectric layer may be avoided (e.g., because the electrode active material layer does not need to be directly coated or dried on the piezoelectric layer), problems and issues such as deformation of the piezoelectric layer or uneven coating occurring during the drying process may be prevented or reduced, which may also be advantageous in terms of securing good or suitable coating properties (e.g., contributes to improved coating uniformity and process stability).

In one or more embodiments, the first metal layer may include a first metal, the second metal layer may include a second metal, and the first metal and the second metal may be the same as or different from each other, and may each independently include indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), and/or a combination thereof.

If (e.g., when) the electrode including the current collector is a positive electrode, the current collector may be a positive electrode current collector, and if (e.g., when) the electrode including the current collector is a negative electrode, the current collector may be a negative electrode current collector. Accordingly, the explanation given herein regarding positive and negative electrodes may be applied equally.

For example, in one or more embodiments, if (e.g., when) the electrode including the current collector is a positive electrode, the current collector (i.e., the positive electrode current collector) may include aluminum (Al), stainless steel (SUS), and/or a combination thereof, but embodiments of the present disclosure are not limited thereto. In one or more embodiments, if (e.g., when) the electrode including the current collector is a negative electrode, the current collector (i.e., the negative electrode current collector) may include indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), and/or a combination thereof, but embodiments of the present disclosure are not limited thereto.

In one or more embodiments, the electrode including the current collector may be a positive electrode, and the current collector (i.e., positive electrode current collector) may include (e.g., be) aluminum (Al). In one or more embodiments, the electrode including the current collector may be a negative electrode, and the current collector (i.e., the negative electrode current collector) may include (e.g., be) copper (Cu).

In one or more embodiments, the current collector may be used in a cylindrical battery form, and the current collector may be rolled into a jelly-roll shape, inserted into a cylindrical battery, and cells may be assembled to form a battery. In the existing cylindrical battery form, jelly roll-shaped expansion has been considered only a negative factor. However, in one or more embodiments of the present disclosure, the principle of the jelly-roll being compressed due to the limited space inside the can (e.g., battery casing), and the piezoelectric principle of forming an electric field by the compression when expanding in the form of a jelly-roll, are combined; as a result, a battery manufactured by utilizing the current collector including a piezoelectric layer using a piezoelectric material, as the volume expands, may exhibit improved electrical characteristics due to the piezoelectric effect. When the piezoelectric effect occurs, an electric field is formed, which reduces the resistance of the current collector and facilitates the movement of electrons and lithium ions. This characteristic may enable the implementation of excellent or suitable battery performance, especially at high rates that require low resistance.

For example, in one or more embodiments, the piezoelectric material may include a piezoelectric single crystal, a piezoelectric polycrystal, a piezoelectric polymer, a piezoelectric composite material, and/or a combination thereof. The piezoelectric single crystal may include an α-AlPO₄ single crystal, an α-SiO₂ single crystal, a LiTaO₃ single crystal, a LiNbO₃ single crystal, a Pb₅Ge₃O₁₁ single crystal, a Tb₂(MoO₄)₃ single crystal, a Li₂B₄O₇ single crystal, a CdS single crystal, a ZnO single crystal, an AIN single crystal, a Bi₁₂SiO₂₀ single crystal, a Bi₁₂GeO₂₀ single crystal, and/or a combination thereof. The piezoelectric polycrystal may include a Pb(Zr_{z}Ti_{1-z})O₃ (PZT) polycrystal, a PbTiO₃ (PT) polycrystal, a Pb(Zr_{z}Ti_{1-z})O₃ (PZT)-composite perovskite polycrystal, a BaTiO₃ polycrystal, and or a combination thereof, wherein 0<z<1. The piezoelectric polymer may include polyvinylidene fluoride (PVDF), poly(vinylidene fluoride-co-trifluoroethylene) (P(VDF-TrFe)), poly(vinylidene fluoride-co-tetrafluoroethylene) (P(VDF-TeFE)), triglycine sulfate (TGS; C₆H₁₇N₃O₁₀S), and/or a combination thereof. The piezoelectric composite material may include Pb(Zr_{z}Ti_{1-z})O₃ (PZT)-PVDF, Pb(Zr_{z}Ti_{1-z})O₃ (PZT)-silicone rubber, Pb(Zr_{z}Ti_{1-z})O₃ (PZT)-epoxy, Pb(Zr_{z}Ti_{1-z})O₃ (PZT)-foamed polymer, Pb(Zr_{z}Ti_{1-z})O₃ (PZT)-foamed urethane, and/or a combination thereof, wherein 0<z<1. When the above-described examples are used as the piezoelectric material, improved electrical characteristics may be effectively secured by exerting the piezoelectric effect by the piezoelectric layer, and the resistance of the current collector may be reduced, thereby improving the performance of the battery.

In one or more embodiments, a thickness of the first metal layer may be ≥ 1 micrometer (µm) to ≤ 20 µm, ≥ 2 µm to ≤ 15 µm, ≥ 2 µm to ≤ 10 µm, or ≥ 2 µm to ≤ 8 µm, and a thickness of the second metal layer may be ≥ 1 µm to ≤ 20 µm, ≥ 2 µm to ≤ 15 µm, ≥ 2 µm to ≤ 10 µm, or ≥ 2 µm to ≤ 8 µm. Within the above ranges, the piezoelectric effect by the piezoelectric layer provided between the first metal layer and the second metal layer may be effectively exhibited, while also securing the effect of securing electrical conductivity by the first metal layer and the second metal layer.

In one or more embodiments, a thickness ratio of the first metal layer to the second metal layer may be about 3:7 to about 7:3, or about 3:7 to about 5:5, and in one or more embodiments, the thickness of the first metal layer and the thickness of the second metal layer may be the same. The piezoelectric effect may be effectively exhibited by the piezoelectric layer provided between the first metal layer and the second metal layer.

In one or more embodiments, a thickness of the piezoelectric layer may be ≥ 1 µm to ≤ 10 µm, ≥ 2 µm to ≤ 10 µm, ≥ 2 µm to ≤ 8 µm, or ≥ 3 µm to ≤ 7 µm. Within above ranges, the piezoelectric effect by the piezoelectric layer may be effectively exhibited.

In one or more embodiments, the thickness of the first metal layer may be greater than the thickness of the piezoelectric layer, and/or the thickness of the second metal layer may be greater than the thickness of the piezoelectric layer. In this way, the effect of securing electrical conductivity by the first metal layer and/or the second metal layer and the piezoelectric effect by the piezoelectric layer may be harmonized with each other.

In one or more embodiments, a total thickness of the first metal layer and the second metal layer may be greater than or equal to about 50%, for example, ≥ 50% to ≤ 90%, ≥ 50% to ≤ 80%, or ≥ 60% to ≤ 75% relative to (e.g., based on) 100% of a total thickness of the current collector (i.e., the total thickness of the first metal layer, the second metal layer, and the piezoelectric layer). For example, the total thickness of the first metal layer and the second metal layer is at least about 50% of the total thickness of the current collector. Within above ranges, the effect of securing electrical conductivity by the first metal layer and the second metal layer may be improved without inhibiting the piezoelectric effect by the piezoelectric layer.

In one or more embodiments, the thickness of the piezoelectric layer may be less than or equal to about 50%, for example, ≥ 10% to ≤ 50%, ≥ 20% to ≤ 50%, or ≥ 25% to ≤ 40% relative to (e.g., based on) the total thickness of 100% of the current collector. For example, the total thickness of the piezoelectric is at most about 50% of the total thickness of the current collector. Within above ranges, the piezoelectric effect by the piezoelectric layer may be improved without impairing the effect of securing electrical conductivity by the first metal layer and the second metal layer.

### Electrode

According to one or more embodiments of the present disclosure, an electrode may include the current collector. The electrode may be at least one of a positive electrode 10 or a negative electrode 20, and the description given below may be equally applied to the positive electrode and the negative electrode.

According to one or more embodiments of the present disclosure, electrode may include the aforementioned current collector, and an electrode active material layer on the current collector. Herein, the electrode active material layer may be a positive electrode active material layer, a negative electrode active material layer, or combinations thereof, and the description given below may be equally applied to the positive electrode active material layer and the negative electrode active material layer.According to one or more embodiments of the present disclosure, an interface resistance between the current collector and the electrode active material layer may be ≥ 0.01 Ω·cm² to ≤ 2.9 Ω·cm², ≥ 0.02 Ω·cm² to ≤ 2.8 Ω·cm², ≥ 0.03 Ω·cm² to ≤ 2.7 Ω·cm², ≥ 0.04 Ω·cm² to ≤ 2.5 Ω·cm², ≥ 0.05 Ω·cm² to ≤ 2.3 Ω·cm², ≥ 0.06 Ω·cm² to ≤ 2 Ω·cm², ≥ 0.07 Ω·cm² to ≤ 1.5 Ω·cm², ≥ 0.08 Ω·cm² to ≤ 1.2 Ω·cm², ≥ 0.09 Ω·cm² to ≤ 1 Ω·cm², ≥ 0.1 Ω·cm² to ≤ 0.8 Ω·cm², ≥ 0.11 Ω·cm² to ≤ 0.5 Ω·cm², or ≥ 0.12 Ω·cm² to ≤ 0.3 Ω·cm².

### Rechargeable Lithium Battery

According to one or more embodiments of the present disclosure, a rechargeable lithium battery may include: a positive electrode; a negative electrode; and an electrolyte, wherein at least one of the positive electrode or the negative electrode is the electrode.

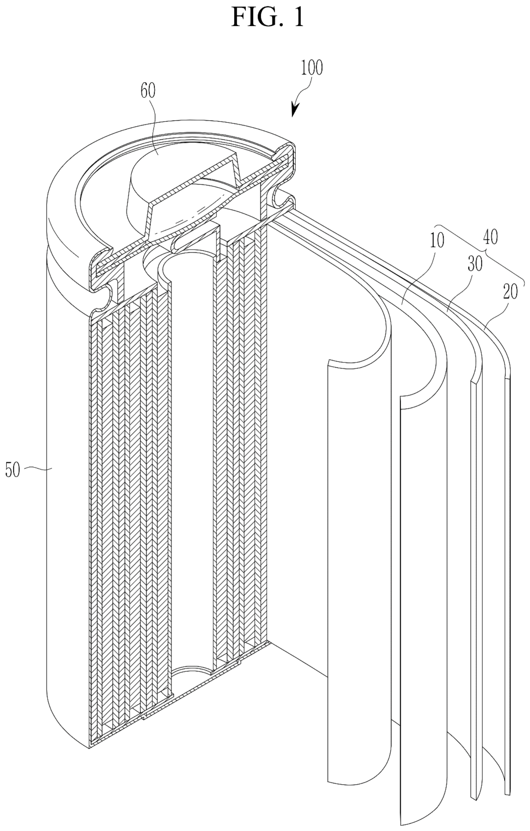

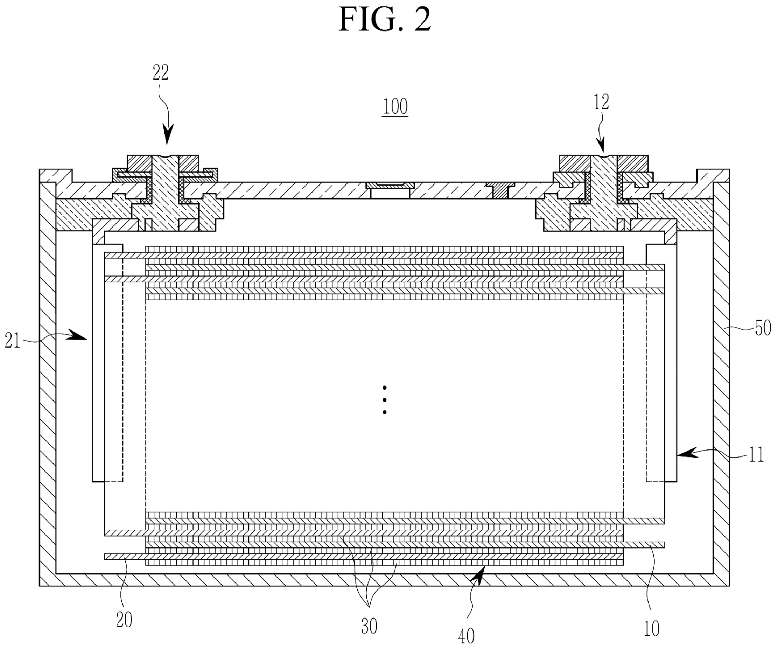

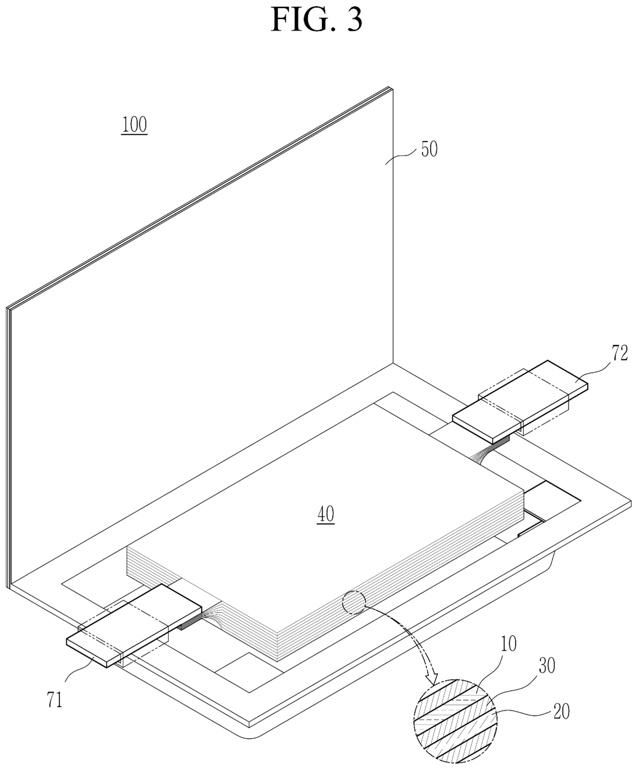

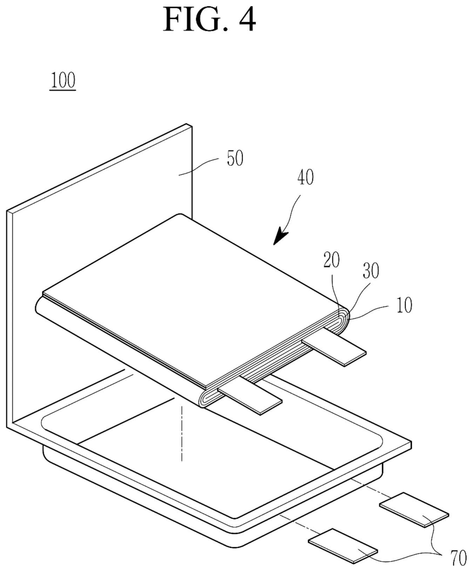

The rechargeable lithium battery may be classified into a cylindrical, prismatic, pouch, coin-type battery, and/or the like, depending on a shape thereof. FIGS. 1 to 4 are each a schematic diagram showing a rechargeable lithium battery according to one or more embodiments of the present disclosure, where FIG. 1 shows a cylindrical battery, FIG. 2 shows a prismatic battery, and FIGS. 3 and 4 each show a pouch-shaped battery. Referring to FIGS. 1 to 4, the rechargeable lithium battery 100 includes an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte solution. In one or more embodiments, the rechargeable lithium battery 100 may include a sealing member 60 that seals the case 50 as shown in FIG. 1. In one or more embodiments, as shown in FIG. 2, the rechargeable lithium battery 100 may include a positive electrode lead tab 11, a positive electrode terminal 12, a negative electrode lead tab 21, and a negative electrode terminal 22. In one or more embodiments, as shown in FIGS. 3 and 4, the rechargeable lithium battery 100 may include an electrode tab 70, that is, a positive electrode tab 71 and a negative electrode tab 72, serving as an electrical path for inducing the current formed in the electrode assembly 40 to the outside. The rechargeable lithium battery according to one or more embodiments may include an electrode assembly including the positive electrode and the negative electrode in a jelly-roll shape.

### Positive Electrode

The positive electrode may include a positive electrode current collector; and a positive electrode active material layer on (e.g., arranged on) the positive electrode current collector, wherein the positive electrode active material layer includes a positive electrode active material (e.g., in a form of particles) and may further include a binder, a conductive material, or a combination thereof, and the positive electrode current collector may be the current collector of one or more embodiments.

### Positive Electrode Active Material Layer

The positive electrode active material layer includes a positive electrode active material (e.g., in a form of particles), and the positive electrode active material may be a compound (lithiated intercalation compound) capable of intercalating and deintercalating lithium. For example, the positive electrode active material may use at least one of a composite oxide of lithium and a metal selected from among cobalt, manganese, nickel, and combinations thereof.

The composite oxide may be a lithium metal composite oxide, and non-limiting examples thereof may include a lithium nickel-based oxide, a lithium cobalt-based oxide, a lithium manganese-based oxide, a lithium metal phosphate, a cobalt-free lithium nickel-manganese oxide, a lithium-manganese-rich oxide, or a combination thereof.

In one or more embodiments, a compound represented by any selected from among the following chemical formulas may be used: LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}CobX_{c}O₂-_{α} D_{α} (0.90 ≤ a ≤ 1.8, 0 ≤ b ≤ 0.5, 0 ≤ c ≤ 0.5, 0 < α < 2); LiₐNi_{1-b-c}Mn_{b}X_{c}O₂-_{α} D_{α} (0.90 ≤ a ≤ 1.8, 0 ≤ b ≤ 0.5, 0 ≤ c ≤ 0.5, 0 < α < 2); LiₐNi_{b}CocL¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8)

in the afore-going chemical formulas, A may be nickel (Ni), cobalt (Co), manganese (Mn), or a combination thereof; X may be aluminum (Al), Ni, Co, Mn, chromium (Cr), iron (Fe), magnesium (Mg), strontium (Sr), vanadium (V), a rare earth element, or a combination thereof; D may be oxygen (O,) fluorine (F), sulfur (S), phosphorus (P), or a combination thereof; G may be Al, Cr, Mn, Fe, Mg, lanthanum (La), cerium (Ce), Sr, V, or a combination thereof; and L¹ may be Mn, Al, or a combination thereof.

In one or more embodiments, the positive electrode active material may include a cobalt-based positive electrode active material (e.g., a lithium cobalt-based composite oxide) having a cobalt content (e.g., amount) of greater than or equal to about 30 mol%, greater than or equal to about 50 mol%, or greater than or equal to about 80 mol% based on 100 mol% of a total metal excluding lithium in the cobalt-based positive electrode active material.

In one or more embodiments, the positive electrode active material may include a high nickel-based positive electrode active material (e.g., a lithium nickel-based composite oxide) having a nickel content (e.g., amount) of greater than or equal to about 80 mol% based on 100 mol% of a total metal excluding lithium in the high nickel-based positive electrode active material. The nickel content (e.g., amount) in the high nickel-based positive electrode active material may be greater than or equal to about 85 mol%, greater than or equal to about 90 mol%, greater than or equal to about 91 mol%, or greater than or equal to about 94 mol% and less than or equal to about 99 mol% based on 100 mol% of a total metal excluding lithium. The high nickel-based positive electrode active materials may achieve high capacity and may be applied to high-capacity, high-density rechargeable lithium batteries.

In the positive electrode active material layer, the binder serves to attach positive electrode active material particles well to each other and also to attach positive electrode active material well to adjacent layers. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

In the positive electrode active material layer, the conductive material (e.g., electrically conductive material) is used to provide conductivity to the electrode, and any electronically conductive material that does not cause an undesirable chemical change in the battery to be formed may be used. Examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminum, silver, and/or the like; a conductive polymer such as a polyphenylene derivative; or a mixture thereof.

In the positive electrode active material layer, amounts of the binder and the conductive material may each be ≥ 0.5 wt% to ≤ 5 wt%, based on a total weight of 100 wt% of the positive electrode active material layer.

In one or more embodiments, a thickness of the positive electrode active material layer may be ≥ 2 µm to ≤ 150 µm, for example ≥ 5 µm to ≤ 140 µm, ≥ 10 µm to ≤ 130 µm, or ≥ 20 µm to ≤ 120 µm.

### Negative Electrode

The negative electrode may include: a negative electrode current collector; and a negative electrode active material layer on the negative electrode current collector, wherein the negative electrode active material layer includes a negative electrode active material (e.g., in a form of particles) and may further include a binder, a conductive material, or a combination thereof, and the negative electrode current collector may be the current collector of one or more embodiments.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite and/or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), thallium (TI), germanium (Ge), phosphorus (P), arsenic (As), antimony (Sb), bismuth (Bi), sulfur (S), selenium (Se), tellurium (Te), polonium (Po), and a combination thereof), or a combination thereof. The Sn-based negative electrode active material may be Sn, SnOₓ (0 < x ≤ 2) (e.g., SnO₂), a Sn alloy, or a combination thereof.

The silicon-carbon composite (e.g., in a form of particles) may be a composite of silicon and amorphous carbon. An average particle diameter (D₅₀) of the silicon-carbon composite particles may be, for example, ≥ 0.5 µm to ≤ 20 µm. According to one or more embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

If (e.g., when) the silicon-carbon composite includes silicon and amorphous carbon, a silicon content (e.g., amount) may be ≥ 10 wt% to ≤ 50 wt% and a content (e.g., amount) of amorphous carbon may be ≥ 50 wt% to ≤ 90 wt%, based on a total weight of 100 wt% of the silicon-carbon composite. In one or more embodiments, if (e.g., when) the composite includes silicon, amorphous carbon, and crystalline carbon, a silicon content (e.g., amount) may be ≥ 10 wt% to ≤ 50 wt%, a content (e.g., amount) of crystalline carbon may be ≥ 10 wt% to ≤ 70 wt%, and a content (e.g., amount) of amorphous carbon may be ≥ 20 wt% to ≤ 40 wt%, based on a total weight of 100 wt% of the silicon-carbon composite.

Additionally, a thickness of the amorphous carbon coating layer may be ≥ 5 nanometers (nm) to ≤ 100 nm. An average particle diameter (D₅₀) of the silicon particles (primary particles) may be ≥ 10 nm to ≤ 1 µm, or ≥ 10 nm to ≤ 200 nm. The silicon particles may exist as silicon alone, in the form of a silicon alloy, or in an oxidized form. The oxidized form of silicon may be represented by SiOₓ (0<x≤2). In this regard, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where a cumulative volume is about 50 volume% in a particle size distribution.

In one or more embodiments, the Si-based negative electrode active material or the Sn-based negative electrode active material may be mixed with the carbon-based negative electrode active material. If (e.g., when) the Si-based negative electrode active material or the Sn-based negative electrode active material and the carbon-based negative electrode active material are mixed and used, the mixing ratio thereof may be a weight ratio of about 1:99 to about 90:10.

### Binder

The binder serves to well adhere the negative electrode active material particles to each other and also to adhere the negative electrode active material to the negative electrode current collector. The binder may be a non-aqueous (e.g., water-insoluble) binder, an aqueous (water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the binder of the negative electrode, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material (e.g., electrically conductive material, e.g., an electron conductor) is included to provide electrode conductivity, and any electrically conductive material may be used as a conductive material unless it causes an undesirable chemical change. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material including copper, nickel, aluminum silver, and/or the like, in the form of a metal powder or a metal fiber; a conductive polymer such as a polyphenylene derivative; and/or a mixture thereof.

An amount of the negative electrode active material may be ≥ 95 wt% to ≤ 99.5 wt% based on a total weight of 100 wt% of the negative electrode active material layer, and an amount of the binder may be ≥ 0.5 wt% to ≤ 5 wt% based on the total weight of 100 wt% of the negative electrode active material layer. For example, in one or more embodiments, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material, based on the total weight of 100 wt% of the negative electrode active layer.

### Current Collector

The negative electrode current collector may be the current collector of one or more embodiments in the form of a foil, a sheet, or a foam. A thickness of the negative electrode current collector may be, for example, ≥ 1 µm to ≤ 20 µm, ≥ 5 µm to ≤ 15 µm, or ≥ 7 µm to ≤ 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions that take part in an electrochemical reaction of the rechargeable lithium battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether group, and/or the like); amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is widely suitable to those skilled in the field.

If (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in one or more embodiments, a carbonate-based solvent and an aromatic hydrocarbon-based organic solvent may be mixed and used in a volume ratio of about 1:1 to about 30:1.

In one or more embodiments, the electrolyte solution may further include vinylethyl carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in the rechargeable lithium battery, enables a basic operation of the rechargeable lithium battery, and improves transportation of the lithium ions between positive and negative electrodes. Non-limiting examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are each an integer of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of ≥ 0.1 *M* to ≤ 2.0 M. When the concentration of lithium salt is within the above range, the electrolyte solution has appropriate or suitable ionic conductivity and viscosity, and thus excellent or suitable performance may be achieved, and lithium ions may move effectively.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a combination thereof on one or both surfaces (e.g., two opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The porous substrate may have a thickness of ≥ 1 µm to ≤ 40 µm, for example, ≥ 1 µm to ≤ 30 µm, ≥ 1 µm to ≤ 20 µm, ≥ 5 µm to ≤ 15 µm, or ≥ 10 µm to ≤ 15 µm.

The organic material may include a (meth)acrylic copolymer including a first structural unit derived from (meth)acrylamide, and a second structural unit including at least one of a structural unit derived from (meth)acrylic acid or (meth)acrylate, or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but embodiments of the present disclosure are not limited thereto. An average particle diameter (D₅₀) of the inorganic particles may be ≥ 1 nm to ≤ 2000 nm, for example, ≥ 100 nm to ≤ 1000 nm, or ≥ 100 nm to ≤ 700 nm.

The organic material and the inorganic material may be mixed in one coating layer, or a coating layer including an organic material and a coating layer including an inorganic material may be stacked.

A thickness of the coating layer may be ≥ 0.5 µm to ≤ 20 µm, for example, ≥ 1 µm to ≤ 10 µm, or ≥ 1 µm to ≤ 5 µm.

Examples and comparative examples of the present disclosure will be described in more detail hereinafter. However, the following examples are merely examples of the present disclosure, and the present disclosure is not limited to the following examples.

### Example 1

### (1) Manufacturing of Positive Electrode

After preparing PVDF as a piezoelectric material, 30 wt% of the PVDF binder was mixed with an N-methyl pyrrolidone (NMP) solvent to prepare a binder solution. The binder solution was coated on a 6 µm-thick aluminum foil (a first metal layer), and another 6 µm-thick aluminum foil (a second metal layer) was attached on the surface where the binder solution was coated and then, dried at 80 °C under a vacuum atmosphere to form a 5 µm-thick piezoelectric layer between the two aluminum foils, thereby manufacturing a positive electrode current collector with a triple-layer structure.

On the positive electrode current collector, a slurry for forming a positive electrode active material layer was prepared by mixing 98.15 wt% of a positive electrode active material (LiCoO₂), 0.8 wt% of carbon black, and 1.05 wt% of a PVDF binder in an NMP solvent and then, dried and compressed, to manufacture a positive electrode having a positive electrode active material layer formed on the positive electrode current collector.

### (2) Manufacturing of Negative Electrode

97.5 wt% of a graphite negative electrode active material, 1 wt% of carboxymethyl cellulose, and 1.5 wt% of styrene butadiene rubber were mixed in a water solvent to prepare a slurry for forming a negative electrode active material layer. The slurry for forming a negative electrode active material layer was coated on a copper foil as a negative electrode current collector and then, dried and compressed to manufacture a negative electrode having a negative electrode active material layer on the negative electrode current collector.

### (3) Manufacturing of Rechargeable Lithium Battery Cell

The positive electrode and the negative electrode were used with a polytetrafluoroethylene separator and an electrolyte solution prepared by dissolving 1 M LiPF₆ in a mixed solvent of ethylene carbonate and dimethyl carbonate in a volume ratio of 3:7 to manufacture a rechargeable lithium battery cell in a common method.

### Comparative Example 1

A rechargeable lithium battery cell was manufactured in substantially the same manner as in Example 1 except that the aluminum foil alone was used as a single layer instead of the positive electrode current collector with the triple-layer structure in the manufacture of the positive electrode.

### Comparative Example 2

A rechargeable lithium battery cell was manufactured in substantially the same manner as in Example 1 except that the binder solution was coated on the aluminum foil and then, dried at 80 °C under a vacuum atmosphere to form a piezoelectric layer, and the slurry for forming a positive electrode active layer was directly coated on the piezoelectric layer and then, dried and compressed to manufacture the positive electrode in the manufacture of the positive electrode.

### Evaluation Example 1: Evaluation of Interface Resistance

Example 1 was measured with respect to interface resistance between the aluminum foil as a positive electrode current collector and the positive electrode active material layer formed on the aluminum foil, and Comparative Example 2 was measured with respect to interface resistance between the piezoelectric layer and the positive electrode active material layer formed on the piezoelectric layer. Herein, the interface resistance was measured by using a 46 pin resistance measuring apparatus (VM3 HIOKI) at a current of 100 µA within a voltage range of 0 to 5 V.

**Table 1**

| | Example 1 | Comparative Example 2 |
|---|---|---|
| Interface resistance (Ω·cm²) | 0.12 | 3.344 |

Referring to Table 1, the interface resistance between the positive electrode current collector and the positive electrode active material layer formed on the aluminum foil in Example 1 was confirmed to be significantly smaller than the interface resistance between the piezoelectric layer and the positive electrode active material layer formed on the piezoelectric layer.

Accordingly, compared with Comparative Example 2, in which the positive electrode active material layer was directly formed on the piezoelectric layer, Example 1, in which the positive electrode active material layer was not directly formed on the piezoelectric layer but on the positive electrode current collector, the first metal layer (or the second metal layer), exhibited excellent or suitable electrical contact.

### Evaluation Example 2: Evaluation of Coating Properties

In the process of manufacturing each of the positive electrode according to Example 1 and Comparative Example 2, whether the slurry for forming a positive electrode active material layer was coagulated or not during the application of the slurry was examined with naked eyes to give '∘' if (e.g., when) the coagulation occurred but '×' if (e.g., when) the coagulation did not occur, which are provided in Table 2.

In addition, whether PVDF was deformed or not in the piezoelectric layer during the coating and drying the slurry for forming a positive electrode active material layer was examined with naked eyes to give '∘' if (e.g., when) PVDF was deformed but '×' if (e.g., when) PVDF was not deformed, which are provided in Table 2.

**Table 2**

| | Example 1 | Comparative Example 2 |
|---|---|---|
| Whether or not coagulation phenomenon occurs in slurry (○/×) | × | ○ |
| Whether or not PVDF deformation occurs (○/×) | × | ○ |

Referring to Table 2, in the case of Example 1, neither coagulation of the slurry nor deformation of the PVDF occurred during the manufacturing process of the positive electrode, which confirmed that the coating properties were good or suitable.

In contrast, in Comparative Example 2, the coating was well performed immediately after coating the slurry for forming a positive electrode active material layer but became non-uniform during the drying, compared with that of Example 1, which was understood to be caused by disadvantageous spreadability between NMP, the solvent of the slurry for forming a positive electrode active material layer, and PVDF of the piezoelectric layer. In addition, during the drying, PVDF of the piezoelectric layer absorbed NMP, the solvent of the slurry for forming a positive electrode active material layer, and swelled and then, tended to dry toward an opposite side of the coating surface of the piezoelectric layer, leading to the deformation of the piezoelectric layer.

In conclusion, compared with Comparative Example 2 in which the positive electrode active material layer was directly formed on the piezoelectric layer, Example 1, in which the positive electrode active material layer was not directly coated on the piezoelectric layer but on the positive electrode current collector, the first metal layer (or the second metal layer), was confirmed to have advantages in terms of coating properties.

### Evaluation Example 3: Evaluation of Cycle-life Performance

After the initial charging and discharging in Evaluation Example 3, the cells were 20 cycles or more repeatedly charged and discharged within a voltage range of 3.0 V to 4.45 V at 1.0 C rate at 25 °C to calculate a ratio of 20^{th} cycle discharge capacity to initial discharge capacity, which is shown in Table 3.

**Table 3**

| | 20^{th} capacity retention rate (%) |
|---|---|
| Example 1 | 99 |
| Comparative Example 1 | 97 |
| Comparative Example 2 | 96 |

Referring to Table 3, Example 1 exhibited a higher 20^{th} capacity retention rate than each of Comparative Examples 1 and 2 and thus excellent or suitable cycle-life performance.

The experimental results, for example, demonstrate that the utilization of a triple-layer current collector structure incorporating a piezoelectric material, as described in Example 1, provides significant advantages over comparable designs. These include reduced interface resistance, improved coating uniformity, and enhanced cycle-life performance. The separation of the piezoelectric layer from the active material layer not only preserves the structural integrity of the piezoelectric material during electrode fabrication but also contributes to superior electrochemical characteristics. These findings validate the effectiveness of the proposed current collector design in improving the reliability and efficiency of rechargeable lithium batteries, particularly under conditions involving repeated volume changes during charge and discharge cycles.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As used herein, the term "Group" as utilized herein refers to a group of the Periodic Table of Elements according to the 1 to 18 grouping system of the International Union of Pure and Applied Chemistry ("IUPAC").

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery (e.g., a negative electrode) manufacturing device, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be practical example embodiments, it is to be understood that the disclosure is not limited to the disclosed embodiments. In contrast, it is intended to cover one or more suitable modifications and equivalent arrangements included within the spirit and scope of the appended claims and equivalents thereof. It is further understood that the scope of the present disclosure is defined by the appended claims and equivalents thereof rather than the detailed description described above, and all modifications and alterations derived from the claims and their equivalents fall within the scope of the present disclosure.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |
| 300: | current collector | 301: | first metal layer |
| 302: | second metal layer | 303: | piezoelectric layer |

## Claims

1. A current collector (300), comprising
a first metal layer (301);
a second metal layer (302); and
a piezoelectric layer (303) between the first metal layer (301) and the second metal layer (302) and comprising a piezoelectric material.

2. The current collector (300) as claimed in claim 1, wherein
the piezoelectric material comprises a piezoelectric single crystal, a piezoelectric polycrystal, a piezoelectric polymer, a piezoelectric composite material, or a combination thereof.

3. The current collector (300) as claimed in claim 1 or 2, wherein
the piezoelectric material comprises a piezoelectric single crystal, a piezoelectric polycrystal, a piezoelectric polymer, a piezoelectric composite material, or a combination thereof and wherein
the piezoelectric single crystal comprises an α-AlPO₄ single crystal, an α-SiO₂ single crystal, a LiTaO₃ single crystal, a LiNbO₃ single crystal, a Pb₅Ge₃O₁₁ single crystal, a Tb₂(MoO₄)₃ single crystal, a Li₂B₄O₇ single crystal, a CdS single crystal, a ZnO single crystal, an AIN single crystal, a Bi₁₂SiO₂₀ single crystal, a Bi₁₂GeO₂₀ single crystal, or a combination thereof.

4. The current collector (300) as claimed in any one of claims 1 to 3, wherein
the piezoelectric material comprises a piezoelectric single crystal, a piezoelectric polycrystal, a piezoelectric polymer, a piezoelectric composite material, or a combination thereof, and wherein
the piezoelectric polycrystal comprises a Pb(Zr_{z}Ti_{1-z})O₃ polycrystal, a PbTiO₃ polycrystal, a Pb(Zr_{z}Ti_{1-z})O₃-composite perovskite polycrystal, BaTiO₃ polycrystal, or a combination thereof, and wherein 0<z<1.

5. The current collector (300) as claimed in any one of claims 1 to 4, wherein
the piezoelectric material comprises a piezoelectric single crystal, a piezoelectric polycrystal, a piezoelectric polymer, a piezoelectric composite material, or a combination thereof, and wherein
the piezoelectric polymer comprises polyvinylidene fluoride, poly(vinylidene fluoride-co-trifluoroethylene), poly(vinylidene fluoride-co-tetrafluoroethylene), triglycine sulfate, or a combination thereof.

6. The current collector (300) as claimed in any one of claims 1 to 5, wherein
the piezoelectric material comprises a piezoelectric single crystal, a piezoelectric polycrystal, a piezoelectric polymer, a piezoelectric composite material, or a combination thereof, and wherein
the piezoelectric composite material comprises Pb(Zr_{z}Ti_{1-z})O₃- polyvinylidene fluoride, Pb(Zr_{z}Ti_{1-z})O₃-silicone rubber, Pb(Zr_{z}Ti_{1-z})O₃-epoxy, Pb(Zr_{z}Ti_{1-z})O₃-foamed polymer, Pb(Zr_{z}Ti_{1-z})O₃-foamed urethane, or a combination thereof, and wherein 0<z<1.

7. The current collector (300) as claimed in any one of claims 1 to 6, wherein
the first metal layer (301) comprises a first metal,
the second metal layer (302) comprises a second metal, and
the first metal and the second metal are the same as or different from each other, and each independently comprises indium, copper, magnesium, stainless steel, titanium, iron, cobalt, nickel, zinc, aluminum, germanium, lithium, or a combination thereof.

8. The current collector (300) as claimed in any one of claims 1 to 7, wherein
a thickness of the first metal layer is in a range of ≥ 1 µm to ≤ 20 µm.

9. The current collector (300) as claimed in any one of claims 1 to 8, wherein
a thickness of the second metal layer is in a range of ≥ 1 µm to ≤ 20 µm.

10. The current collector (300) as claimed in any one of claims 1 to 9, wherein
a thickness of the piezoelectric layer (303) is in a range of ≥ 1 µm to ≤ 10 µm.

11. The current collector (300) as claimed in any one of claims 1 to 10, wherein
a thickness ratio of the first metal layer (301) to the second metal layer (302) is 3:7 to 7:3.

12. The current collector (300) as claimed in any one of claims 1 to 11, wherein
a total thickness of the first metal layer (301) and the second metal layer (302) is at least 50% of a total thickness of the current collector (300).

13. The current collector (300) as claimed in any one of claims 1 to 12, wherein
a total thickness of the piezoelectric layer (3039 is at most 50% of a total thickness of the current collector (300).

14. An electrode comprising the current collector (300) as claimed in any one of claims 1 to 13.

15. A rechargeable lithium battery (100), comprising
a positive electrode (10);
a negative electrode (20); and
an electrolyte,
wherein at least one of the positive electrode (10) or the negative electrode (20) is the electrode as claimed in claim 14; wherein preferably
an electrode assembly (40) comprising the positive electrode (10) and the negative electrode (20) has a jelly-roll shape.
